Europäisches Patentamt

European Patent Office

Office européen des brevets

(19)

(11) **EP 1 096 714 A2**

(12) **EUROPEAN PATENT APPLICATION**

(43) Date of publication:
02.05.2001 Bulletin 2001/18

(51) Int Cl.⁷: $H04K\ 1/00$

(21) Application number: 00309498.4

(22) Date of filing: 27.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 29.10.1999 JP 30927699
12.04.2000 JP 2000110304

(71) Applicant: **Matsushita Electric Industrial Co., Ltd.**
**Kadoma-shi, Osaka 571-8501 (JP)**

(72) Inventors:
• **Sekibe, Tsutomu**
  **Hirakata-shi, Osaka-fu 573-0047 (JP)**
• **Otake, Toshihiko**
  **Osaka-shi, Osaka-fu 532-0022 (JP)**
• **Taoka, Hiroki**
  **Osaka-shi, Osaka-fu 532-0022 (JP)**

(74) Representative: **Gill, Ian Stephen et al**
**A.A. Thornton & Co.**
**235 High Holborn**
**GB-London WC1V 7LE (GB)**

(54) **Contents data conversion apparatus and method, and record medium storing contents data conversion program**

(57) A contents data conversion apparatus for encrypting or decrypting streams of contents data which are each divided into a plurality of frames, each frame including a piece of header information and a contents portion, the piece of header information including attribute information of the frame, all contents portions in each stream of contents data forming a content. The contents data conversion apparatus comprises: an acquisition unit which acquires one or more streams of contents data; an extraction unit which extracts frames one by one from the contents data; a separation unit which separates each frame into the piece of header information and the contents portion; a conversion unit which either encrypts or decrypts each contents portion to generate a converted contents portion; and a combination unit which combines each piece of header information with each converted contents portion, and outputs a result of the combination.

## Description

BACKGROUND OF THE INVENTION

(1) Field of the Invention

The present invention relates to a contents data conversion apparatus. More particularly, the present invention relates to a technique for decrypting encrypted contents data including a plurality of frames at high speed, and also relates to a technique for generating the encrypted contents data which has the same security level as conventional ones.

(2) Description of Related Art

Services for distributing music or the like represented by digital data (hereinafter referred to as contents data) via a network are becoming practical.

Conventionally, contents data reception/reproduction apparatuses for use in such distribution services have been achieved as a function of a personal computer. The conventional contents data reception/reproduction apparatuses receive and store the distributed contents data into a storage apparatus therein, read and convert the contents data into an analog audio signal, and output the analog audio signal.

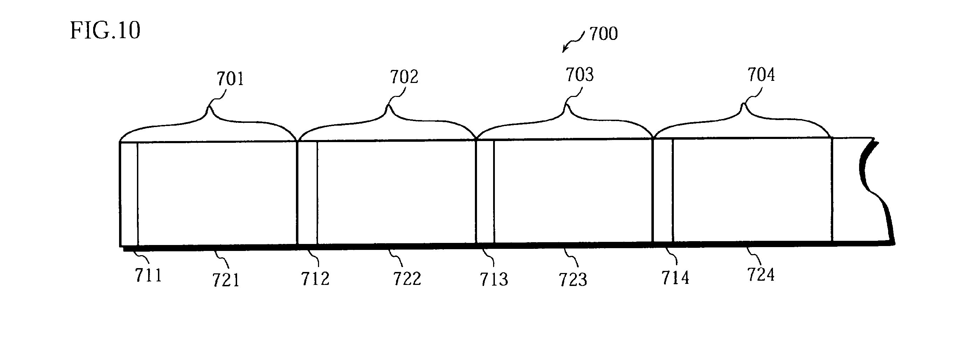

FIG. 10 shows the construction of conventional contents data 700 which represents music or the like, conforms to the MP3 standard, and is distributed by the distribution service. As shown in FIG. 10, the contents data 700 includes frames 701 to 704, where "frame" is a unit of contents data. The frames 701 to 704 include: (1) header fields 711 to 714 which hold attribute information of the frame; and (2) data fields 721 to 724 which hold audio data representing music or the like, respectively.

Each header field holds attribute information which indicates, for example, whether the data held by the data field is for stereo or monaural. Each data field holds compressed digital audio data which represents music to be played for a certain time period.

The header field and the data field have a fixed length, respectively. Naturally, the frames composed of the header fields and the data fields have a fixed length. More specifically, in the case of contents data conforming to the MP3 standard and having 48 KHz of sampling frequency and 128 Kbps of bit rate, the header field is 4 bytes and the data field is 384 bytes in length.

The distribution services desire a new data compression/decompression method which allows a certain amount of data to represent higher quality music so that high-quality contents data can be distributed at conventional communication costs. To fulfill the desire, data compression/decompression methods for improving the data compression efficiency have been developed. One of such methods is AAC (Advanced Audio Coding).

The AAC method is a technique for improving the data compression efficiency by compressing each piece of digital audio data corresponding to a certain play time so that each piece of the compressed digital audio data has a different amount of data in proportionate to the original amount of audio data. The compressed data is recorded as it is. The frames in the AAC method have variable lengths. As a result, to recognize the range of each frame, each header field includes: (1) a synchronization code indicating the start of the frame; and (2) a numeral indicating the length of the frame.

It is expected that by using the contents data conforming to the AAC method, the quality of the contents data that can be distributed at a certain communication cost will be improved and the distribution service will be used more frequently.

The conventional contents data reception/reproduction apparatuses, however, have a problem. That is, since they record the received contents data without encrypting it, namely in a format that allows everyone to access the contents data, the distributed contents can be copied easily, which inhibits the distribution services from developing healthily.

For the above reasons, it has strongly been desired to manage the accesses to the contents data to prevent improper accesses by encrypting the contents data so that only users having a proper decryption key can handle (i.e., reproduce, copy, etc.) the contents data. Such a management of accesses to contents data has not been achieved yet since it takes a lot of time to decrypt the encrypted contents data from some midpoint in the data.

The above problem is generated for the following reasons.

Generally, for encryption or decryption, the contents data is divided into units having a certain size (referred to as encryption processing unit) and the contents data is encrypted or decrypted for each encryption processing unit. In general, the larger the encryption processing unit is, the higher the security level is due to the difficulty in identifying a key for decryption. Also, the smaller the encryption processing unit is, the smaller the processing time is. The size of the encryption processing unit is determined (to 64 bits, for example) by considering the merits and demerits of both conditions.

What is called chain key method has been used in which the first encryption processing unit of each frame is encrypted using a certain key (referred to as initial key), and each succeeding encryption processing unit is encrypted using a key which is determined from the content of the previous encryption processing units (referred to as chain key). Since it is very difficult for users with improper intentions to correctly identify the initial key and all of the chain keys, this method enhances the security level of the encrypted contents data.

In decryption, it is also required to use the initial key and the chain keys properly. The process for detecting the first encryption processing unit of each frame is therefore very important.

However, the synchronization code is not always encrypted to the same value. It is therefore impossible to detect an encrypted synchronization code by detecting a certain value in encrypted contents data.

As a result, to decrypt encrypted contents data (typically, contents data encrypted with the AAC method) with variable-length frames from a desired midpoint, the apparatus must repeat, up to the desired frame, the process of decrypting the header field of a frame and determining the starting position of the next. frame based on the frame length information included in the decrypted header field. This requires a lot of time due to a large amount of calculation in the above decryption process.

The above problem is experienced with the encrypted contents data including the fixed-length frames (typically contents data conforming to the MP3 standard) when one stream of data includes a plurality of tunes having different frame lengths, that is, tunes represented by different sampling frequencies or bit rates.

## SUMMARY OF THE INVENTION

It is therefore an object of the present invention to provide a contents data conversion apparatus which decrypts encrypted contents data including a plurality of frames at high speed, and also generates the encrypted contents data which has the same security level as conventional ones.

(1) The above object is fulfilled by a contents data conversion apparatus for either encrypting or decrypting streams of contents data which are each divided into a plurality of frames, each frame including a piece of header information and a contents portion, the piece of header information including attribute information of the frame, all contents portions in each stream of contents data forming a content, the contents data conversion apparatus comprising: an acquisition unit operable to acquire one or more streams of contents data; an extraction unit operable to extract frames one by one from the one or more streams of contents data; a separation unit operable to separate each of the extracted frames into the piece of header information and the contents portion; a conversion unit operable to either encrypt or decrypt each contents portion to generate a converted contents portion; and a combination unit operable to combine each piece of header information with each converted contents portion, and output a result of the combination.

With the above construction, the contents data conversion apparatus neither encrypts nor decrypts the header field in each frame of the contents data. As a result, when the header information includes some information indicating the start of a frame, each frame can be found without decrypting the header fields. This enables the contents data to be decrypted at high speed. Each contents portion is decrypted. As a result, it is possible to generate the encrypted contents data which has the same security level as conventional ones and can be decrypted at high speed.

(2) In the above contents data conversion apparatus, the piece of header information of each frame may include, at a certain position in the piece of header information, a synchronization code that is a predetermined pattern of bits, and the extraction unit detects the synchronization code from each piece of header information and extracts each frame from the one or more streams of contents data based on the detected synchronization codes.

With the above construction, it is possible to obtain the same effect as the contents data conversion apparatus of (1) above.

(3) In the above contents data conversion apparatus, the piece of header information of each frame may include, subsequent to the synchronization code, frame length information indicating a length of the frame, and the extraction unit detects the frame length information and extracts each frame by extracting the synchronization code and succeeding data of the length indicated by the detected frame length information from the one or more streams of contents data.

With the above construction, it is possible to obtain the same effect as the contents data conversion apparatus of (1) above.

(4) In the above contents data conversion apparatus, the piece of header information of each frame may be located at a start of the frame and has a fixed length, and the separation unit separates the piece of header information by separating a starting portion having the fixed length from each separated frame, and separates a remaining portion of the frame as the contents portion.

With the above construction, it is possible to obtain the same effect as the contents data conversion apparatus of (1) above.

(5) In the above contents data conversion apparatus, the acquisition unit acquires one or more pieces of range information corresponding to the one or more streams of contents data on a one-to-one basis, each piece of range information indicating a block in the one or more streams of contents data, and the extraction unit extracts each frame from each block by detecting the synchronization code included in each block indicated by each piece of range information.

With the above construction, when an editing apparatus or the like instructs the contents data conversion apparatus to encrypt or decrypt a certain range of the contents data, the contents data conversion apparatus can find locations of the frames included in the specified range at high speed and encrypt or decrypt the range at high speed.

(6) In the above contents data conversion apparatus, the conversion unit may divide each separated contents portion into processing units each having a predetermined length, in order from a start, either encrypts or decrypts each processing unit, and combines all encrypted or decrypted processing units of each separated contents portion with an end part of the separated contents portion to generate each converted contents portion, the end part being smaller than one processing unit.

With the above construction, when the contents data conversion apparatus encrypts or decrypts in units of processing units, the odd piece of contents data that is at the end of each contents portion and is smaller than one processing unit is neither encrypted nor decrypted. There is, therefore, no need to add temporary data to the end of each contents portion to form a processing unit. This prevents the amount of contents data from increasing. In this case, the odd piece of contents data at the end of each data field is neither encrypted nor decrypted. However, the ratio of it to the entire amount of the data field is very small. Therefore, even if someone reproduces the data field and can hear a fragment of a tune at the odd piece of contents data, it does not make sense for the listener. From this point of view, the security level of the encrypted contents data is not degraded.

(7) In the above contents data conversion apparatus, the combination unit may further output the one or more streams of contents data acquired by the acquisition unit excluding the frames extracted by the extraction unit.

With the above construction, it is possible, for example, to specify a range of contents data for which a fee is charged, the contents data in the range being encrypted and decrypted, and to allow the remaining contents data to be provided to the user for a test-listen without charge.

(8) In the above contents data conversion apparatus of (6), the combination unit may further output null data as a replacement for parts of the one or more streams of contents data acquired by the acquisition unit other than the frames extracted by the extraction unit.

With the above construction, the contents data conversion apparatus outputs null data as a replacement for parts of contents data other than the specified range. This restricts the amplitude of the output signal, decreasing the electricity consumption by the apparatus.

(9) In the above contents data conversion apparatus of (1), the extraction unit may include one or more sub-extraction units which operate in parallel, the one or more sub-extraction units corresponding to the one or more streams of contents data on a one-to-one basis, and each sub-extraction unit extracting frames one by one from a corresponding stream of contents data, the separation unit includes one or more sub-separation units which correspond to the one or more sub-extraction units on a one-to-one basis and operate in parallel, each sub-separation unit separating each frame extracted by a corresponding sub-extraction unit into the piece of header information and the contents portion and storing the contents portion, the conversion unit converts each contents portion separated by each sub-separation unit into each converted contents portion, and the combination unit includes one or more sub-combination units which correspond to the one or more sub-separation units on a one-to-one basis and operate in parallel, each sub-combination unit combining each piece of header information separated by a corresponding sub-separation unit with each converted contents portion converted from each contents portion separated by the corresponding sub-separation unit, and outputting a result of the combination.

With the above construction, the contents data conversion apparatus processes a plurality of streams of contents data simultaneously, in the eyes of the user. If, for example, a stream of contents data is not distributed at the real-time rate due to the slow communication speed in the network, users can receive this stream of contents data, and at the same time reproduce another stream of encrypted contents data having already been obtained. This improves the utility of the present apparatus.

(10) In the above contents data conversion apparatus, the acquisition step may acquire multiplexed contents data in which a plurality of streams of contents data have been multiplexed, separates the multiplexed contents data into the plurality of streams of contents data, and the one or more sub-extraction units correspond to the plurality of streams of contents data on a one-to-one basis, and each sub-extraction unit extracts frames one by one from a corresponding stream of contents data separated by the acquisition unit.

With the above construction, it is possible to obtain the same effect as the contents data conversion apparatus of (9) above.

(11) In the above contents data conversion apparatus, the piece of header information of each frame may include, at a certain position in the piece of header information, a synchronization code that is a predetermined pattern of bits, and each sub-extraction unit detects the synchronization code from each piece of header information in the corresponding stream of contents data separated by the acquisition unit, and extracts each frame from the corresponding stream of contents data based on the detected synchronization codes.

With the above construction, it is possible to obtain the same effect as the contents data conversion apparatus of (2) above, for each stream of contents data.

(12) In the above contents data conversion apparatus, the piece of header information of each frame may include, subsequent to the synchronization code, frame length information indicating a length of the frame, and each sub-extraction unit detects the frame length information and extracts each frame by extracting the synchronization code and succeeding data of the length indicated by the detected frame length information from the corresponding stream of contents data.

With the above construction, it is possible to obtain the same effect as the contents data conversion apparatus of (3) above, for each stream of contents data.

(13) In the above contents data conversion apparatus, the piece of header information of each frame may be located at a start of each frame and has a fixed length, and each sub-separation unit separates the piece of header information by separating a starting portion having the fixed length from each frame separated by the corresponding sub-extraction unit, and separates a remaining portion of the frame as the contents portion.

With the above construction, it is possible to obtain the same effect as the contents data conversion apparatus of (4) above, for each stream of contents data.

(14) In the above contents data conversion apparatus, the acquisition step may acquire one or more pieces of range information corresponding to the one or more streams of contents data on a one-to-one basis, each piece of range information indicating a block in the one or more streams of contents data, and each sub-extraction unit extracts each frame from each block by detecting the synchronization code included in each block indicated by each piece of range information.

With the above construction, it is possible to obtain the same effect as the contents data conversion apparatus of (5) above, for each stream of contents data.

(15) In the above contents data conversion apparatus, the conversion unit may divide each separated contents portion into processing units each having a predetermined length, in order from a start, either encrypts or decrypts each processing unit, and combines all encrypted or decrypted processing units of each separated contents portion with an end part of the separated contents portion to generate each converted contents portion, the end part being smaller than one processing unit.

With the above construction, it is possible to obtain the same effect as the contents data conversion apparatus of (6) above, for each stream of contents data.

(16) In the above contents data conversion apparatus, each sub-combination unit may further output the corresponding stream of contents data separated by the acquisition unit excluding the frames extracted by the corresponding sub-extraction unit.

With the above construction, it is possible to obtain the same effect as the contents data conversion apparatus of (7) above, for each stream of contents data.

(17) In the above contents data conversion apparatus of (15), each sub-combination unit may further output null data as a replacement for parts of the corresponding stream of contents data separated by the acquisition unit other than the frames extracted by the corresponding sub-extraction unit.

With the above construction, it is possible to obtain the same effect as the contents data conversion apparatus of (8) above, for each stream of contents data.

(18) The above object is also fulfilled by a contents data conversion method for use in a contents data conversion apparatus for either encrypting or decrypting streams of contents data, the contents data conversion method comprising: an acquisition step for acquiring one or more streams of contents data; an extraction step for extracting frames one by one from the one or more streams of contents data; a separation step for separating each of the extracted frames into the piece of header information and the contents portion; a conversion step for either encrypting or decrypting each contents portion to generate a converted contents portion; and a combination step for combining each piece of header information with each converted contents portion, and outputting a result of the combination.

With the above construction, it is possible to achieve a contents data conversion method having the same effect as the contents data conversion apparatus of (1) above.

(19) The above object is also fulfilled by a computer-readable record medium recording a program for use in a contents data conversion apparatus for either encrypting or decrypting streams of contents data, the program comprising: an acquisition step for acquiring one or more streams of contents data; an extraction step for extracting frames one by one from the one or more streams of contents data; a separation step for separating each of the extracted frames into the piece of header information and the contents portion; a conversion step for either encrypting or decrypting each contents portion to generate a converted contents portion; and a combination step for combining each piece of header information with each converted contents portion, and outputting a result of the combination.

With the above construction, it is possible to achieve a record medium storing a program having the same effect as the contents data conversion apparatus of (1) above.

BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:

FIG. 1 shows an appearance of the contents data reception/reproduction apparatus including the contents data conversion apparatus;
FIG. 2 shows the construction of the contents data 110 in the Embodiment 1;
FIG. 3 shows the construction of the entire contents data reception/reproduction apparatus 100 in Embodiment 1;
FIG. 4 shows the construction of the encryption control unit 50 in Embodiment 1;
FIG. 5 shows a detailed operation of the encryption control unit 50 in Embodiment 1;
FIG. 6 shows the construction of the contents data reception/reproduction apparatus 100 in Embodiment 2;
FIG. 7 shows a construction of the contents data 300 in Embodiment 2;
FIG. 8 shows the construction of the encryption control unit 50 in Embodiment 2;
FIG. 9 shows a detailed operation of the encryption control unit 50 in Embodiment 2; and
FIG. 10 shows the construction of the conventional contents data 700.

DESCRIPTION OF THE PREFERRED EMBODIMENTS

<Embodiment 1>

The following is a description of the contents data conversion apparatus in Embodiment 1 explained with reference to the drawings.

Outline

The contents data conversion apparatus is built into a contents data reception/reproduction apparatus, as an encryption control apparatus to encrypt and decrypt contents data. The contents data reception/reproduction apparatus is achieved as, for example, an additional function to a personal computer, a portable information equipment, a handheld telephone, or a dedicated equipment. The contents data reception/reproduction apparatus receives contents data distributed through a wired or wireless network, encrypts the received contents data using the encryption control apparatus so that only users having a proper decryption key can reproduce and/or copy the data, and stores the encrypted data into a memory card. The contents data reception/reproduction apparatus also decrypts and copies the encrypted contents data in the memory card using the encryption control apparatus.

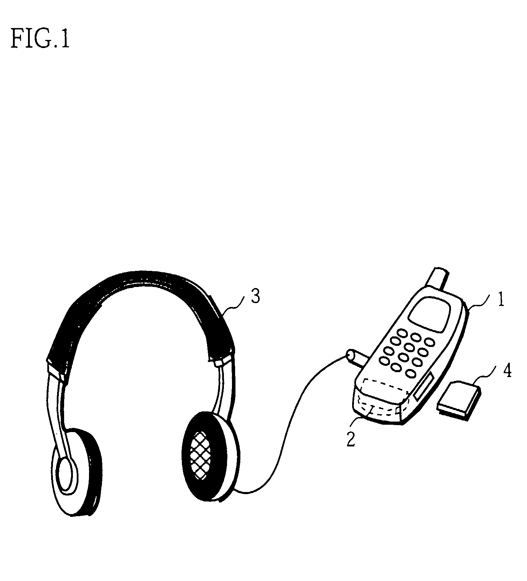

FIG. 1 shows the appearance of the contents data reception/reproduction apparatus including the contents data conversion apparatus and achieved as an additional function to a handheld telephone. In FIG. 1, "1" indicates the contents data reception/reproduction apparatus as a handheld telephone, "2" the encryption control apparatus as included in the contents data reception/reproduction apparatus, "3" a headphone, and "4" the memory card. The memory card 4 can be inserted into and removed from the contents data reception/reproduction apparatus 1.

Since the memory card 4 is constructed to be able to be inserted into and removed from the contents data reception/reproduction apparatus 1, a user having a proper decryption key not only can decrypt and reproduce the encrypted contents data stored in the memory card 4 using the contents data reception/reproduction apparatus 1, but insert the memory card 4 into another contents data reproduction apparatus to reproduce the contents data.

On the other hand, users not having the proper decryption key can neither reproduce nor copy the contents data stored in the memory card 4. This eliminates improper accesses to the contents data.

Contents Data 110

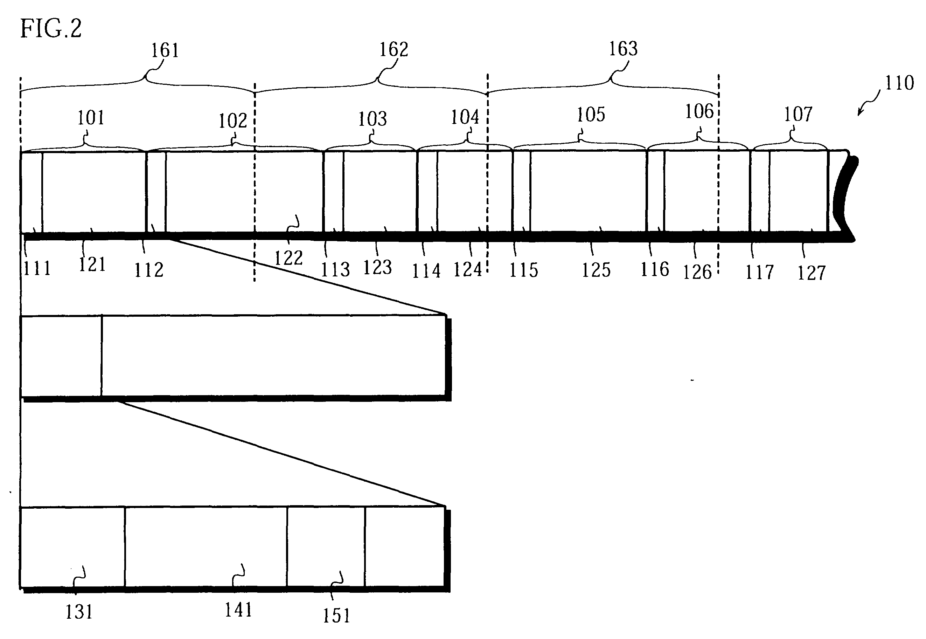

FIG. 2 shows the construction of the contents data 110 in the present embodiment. The contents data 110 conforms to, for example, the AAC method having been described earlier, and includes frames 101 to 107, where "frame" is a construction unit defined in the AAC method. Each frame includes a header field (in FIG. 2, 111 to 117 denote header fields) and a data field (in FIG. 2, 121 to 127 denote data fields). Each header field has fixed length of 56 bits. The data field has variable length of a multiple of eight bits (one byte).

The data field holds compressed digital audio data corresponding to a certain play time. Each data field holds a different amount of data.

The header field is composed of a synchronization code 131, frame attribute information 141, and a frame length value 151.

The synchronization code 131 is a series of 12 "1" bits that are located at the start of the header field. The frame length value 151 is 13 bits in size, ranging from the $31^{st}$ bit to the $43^{rd}$ bit of the header field, and indicates the number of bytes included in the frame (i. e., the number of bits/8). The frame attribute information 141 is a part of the header field excluding the synchronization code 131 and frame length value 151, and holds attribute information specifying the attribute of the data held by the data field, for example, whether the data is for stereo or monaural.

The contents data 110 is transferred among components of the contents data reception/reproduction apparatus one data management block at a time. The data management block is a unit that is not related to the logical construction of the contents data itself, but is determined in accordance with, for example, the data bus or file system-actually adopted in the apparatus. In the present embodiment, the data management block has a size of 512 bytes. In FIG. 2, "161" to "163" indicate data management blocks.

Contents data reception/reproduction apparatus

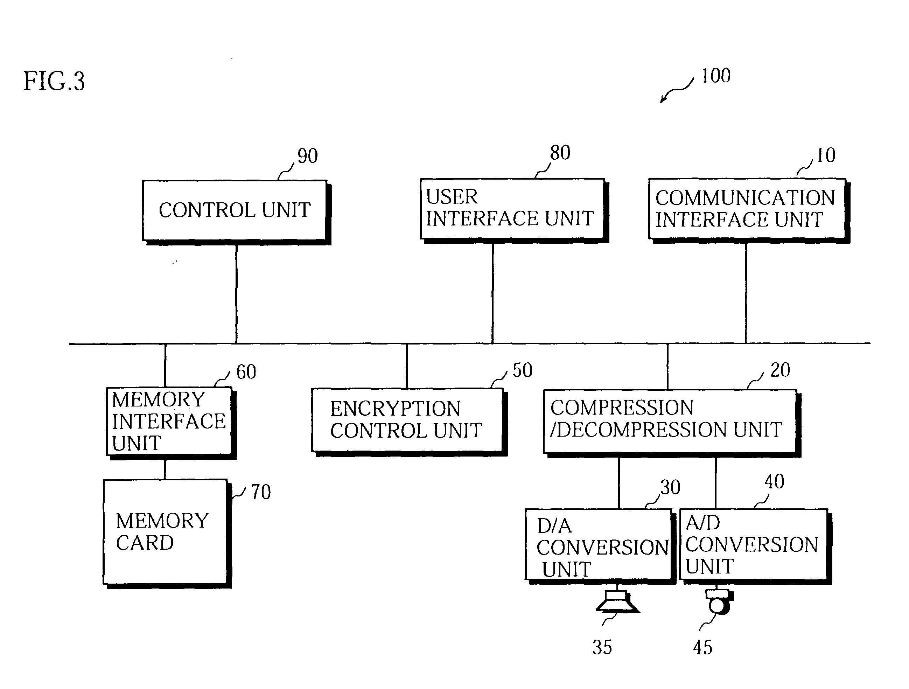

FIG. 3 shows the construction of the entire contents data reception/reproduction apparatus 100. The contents data reception/reproduction apparatus 100 includes a communication interface unit 10, a compression/decompression unit 20, a D/A conversion unit 30, a speaker 35, an A/D conversion unit 40, a microphone 45, an encryption control unit 50, a memory interface unit 60, a memory card 70, a user interface unit 80, and a control unit 90.

Each component of the contents data reception/reproduction apparatus 100 is used not only to process the contents data, but to achieve functions of a general handheld telephone. In the following description, each component is explained based on the former function thereof.

The communication interface unit 10 receives the contents data distributed via a wireless network and outputs the received data to the encryption control unit 50. It should be noted here that the contents data is encoded before it is distributed via the network in order to prevent entanglement, eavesdropping and the like on the network. The communication interface unit 10 decodes the received contents data in terms of the above encoding.

The encryption control unit 50 encrypts the contents data received from the communication interface unit 10, and stores the encrypted contents data into the memory card 70 via the memory interface unit 60. The encryption control unit 50 reads and decrypts the encrypted contents data stored in the memory card 70, and outputs the decrypted data to the compression/decompression unit 20.

The compression/decompression unit 20 decompresses the contents data output from the encryption control unit 50 to digital audio data, and outputs the digital audio data to the D/A conversion unit 30.

The D/A conversion unit 30 converts the digital audio data output from the compression/decompression unit 20 into an analog audio signal and allows the speaker 35 to outputs the analog audio signal as the sound.

The A/D conversion unit 40 and the microphone 45 are used mainly for the telephone conversation function of the handheld telephone. The A/D conversion unit 40 converts the user's voice into digital audio data and outputs the digital audio data to the compression/decompression unit 20. The digital audio data is compressed by the compression/decompression unit 20 and then transmitted via the communication interface unit 10.

The user interface unit 80 is constructed of, for example, keys and a liquid crystal display, receives user's instructions to receive or reproduce the contents data, and presents information such as the title of the currently played tune, the elapsed playing time or the like to the user.

The control unit 90 is constructed of a microcomputer and an embedded ROM and controls the entire contents data reception/reproduction apparatus 100 by allowing the microcomputer to execute a program stored in the embedded ROM.

The control unit 90, when reproducing a part of the encrypted contents data stored in the memory card 70, provides the encryption control unit 50 with information indicating a range of the part of the contents data to be reproduced.

Encryption Control Unit 50

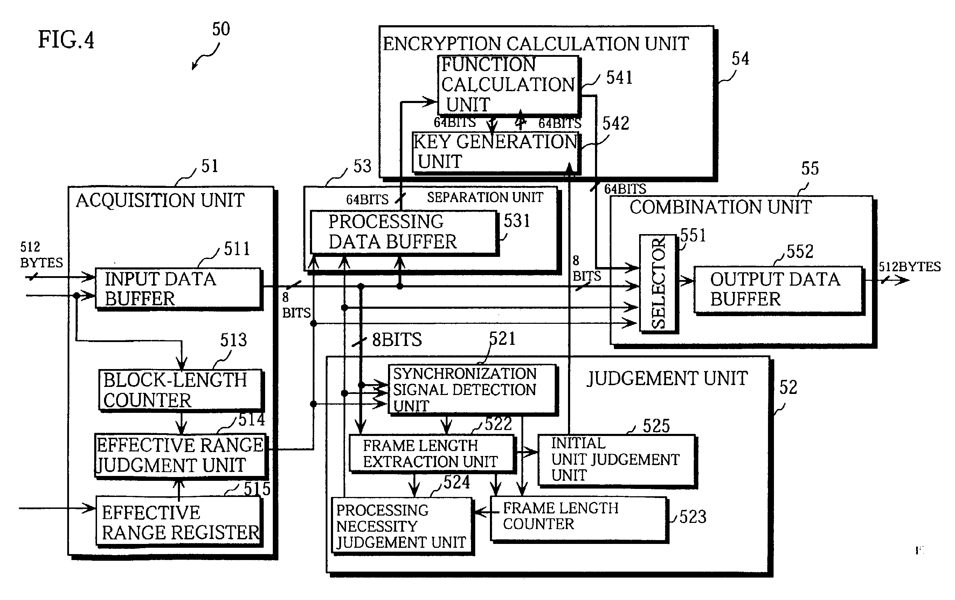

FIG. 4 shows the construction of the encryption control unit 50. The encryption control unit 50 is composed of an acquisition unit 51, a judgement unit 52, a separation unit 53, an encryption calculation unit 54, and a combination unit 55. The encryption control unit 50 generates encrypted contents data by encrypting only the data field of the contents data, and restores the original contents data by decrypting only the data field of the encrypted contents data.

Acquisition Unit 51

The acquisition unit 51 includes an input data buffer 511, a block-length counter 513, an effective range judgement unit 514, and an effective range register 515.

The acquisition unit 51 acquires the contents data from the communication interface unit 10 or the memory interface unit 60 one data management block of 512 bytes at a time, and stores the acquired data into the input data buffer 511 one data management block at a time.

The acquisition unit 51, at the same time as acquires the contents data one data management block at a time, acquires from the control unit 90: (1) numerals indicating the start byte and the end byte of a range including effective data for each acquired data management block; and (2) a flag indicating the last data management block that includes the last portion of the effective data, and stores the acquired numerals and flag into the effective range register 515.

The block-length counter 513 shows the bytes #1 to #512 in order for each acquired data management block. The input data buffer 511 supplies the judgement unit 52, separation unit 53, and combination unit 55 with byte data corresponding to the byte serial numbers shown by the block-length counter 513 (hereinafter, each byte of the contents data supplied from the input data buffer 511 is referred to as byte data).

The effective range judgement unit 514 outputs an effective signal indicating that the byte data in the range indicated by the effective range register 515 is effective.

## Judgement Unit 52

The judgement unit 52 includes a synchronization signal detection unit 521, a frame length extraction unit 522, a frame length counter 523, a processing necessity judgement unit 524, and an initial unit judgement unit 525, and judges whether each piece of byte data should be encrypted or decrypted.

The synchronization signal detection unit 521 detects the start of a series of 12 "1" bits by monitoring the byte data in the range indicated by the effective range register 515 when the frame length counter 523 has value 0.

The frame length extraction unit 522 extracts a numeral indicating the frame length from a certain relative position in the contents data with reference to the position detected by the synchronization signal detection unit 521, .and stores the numeral.

The frame length counter 523 has value "0" as the initial value, and when the synchronization signal detection unit 521 detects the start of a series of bits "1", holds value "1" indicating the byte data at the detected start position, then increments the value by "1" each time byte data is supplied from the acquisition unit 51. In this way, the frame length counter 523 holds a value showing a serial byte number in a frame. The frame length counter 523 holds value "0" for a piece of byte data supplied after the value reaches the frame length stored in the frame length extraction unit 522.

The processing necessity judgement unit 524 judges whether encryption or decryption is necessary, and judges positively when the following condition is satisfied:

$$8 \leqq n \leqq \text{int}((f\text{-}7)/8) \times 8 + 7$$

where "n" is a value held by the frame length counter 523, "f" a value held by the frame length extraction unit 522, and "int(x)" the highest integer under "x". Note that the target of this judgement is the byte data in the data field except for the end part of the data field which is smaller than an encryption processing unit, the end part being generated when the data field is divided into the encryption processing units.

The initial unit judgement unit 525 notifies the encryption calculation unit 54 that the first encryption processing unit of the frame is currently processed when the value held by the frame length extraction unit 522 is 15 or higher and the numeral held by the frame length counter 523 is in the range 8 to 15.

## Separation Unit 53

The separation unit 53 includes a processing data buffer 531, sequentially stores into the processing data buffer 531 the byte data which has been judged as effective by the effective range judgement unit 514 and has been judged as needed to be encrypted or decrypted by the processing necessity judgement unit 524, and outputs the byte data from the processing data buffer 531 to the encryption calculation unit 54 when eight pieces of byte data (i.e., 64-bit data) which constitute one encryption processing unit have been stored in the processing data buffer 531.

## Encryption Calculation Unit 54

The encryption calculation unit 54 includes a function calculation unit 541 and a key generation unit 542, encrypts or decrypts, using the chain key method having been described earlier, each one encryption processing unit of contents data supplied from the separation unit 53, and outputs the result to the combination unit 55.

The function calculation unit 541 performs an encryption or decryption calculation on each one encryption processing unit of contents data supplied from the separation unit 53 using the key supplied from the key generation unit 542, outputs the calculation result to the combination unit 55, and at the same time, outputs an intermediate result of the calculation to the key generation unit 542.

The key generation unit 542 calculates the chain key to be used for the next one encryption processing unit of contents data, based on the intermediate result, and supplies the function calculation unit 541 with the chain key. Note that the key generation unit 542 supplies the function calculation unit 541 with the initial key it stores beforehand when the initial unit judgement unit 525 notifies that the first encryption processing unit of the frame is currently processed.

The encryption calculation unit 54 performs the encryption and decryption, for example, using a function defined in DES (Data Encryption Standard). According to DES, the encryption function is the same as the decryption function except for the value used as the key. The encryption calculation unit 54 is achieved by one circuit which can execute both the encryption and decryption.

## Combination Unit 55

The combination unit 55 includes a selector 551 and an output data buffer 552, and generates output data by combining both parts of the contents data, namely the part having been encrypted or decrypted and the rest of the contents data.

The selector 551 selects byte data which has been judged as effective by the effective range judgement unit 514, has been judged as needed to be encrypted or decrypted by the processing necessity judgement unit 524, and has been encrypted or decrypted by the encryption calculation unit 54, and selects the byte data supplied from the input data buffer 511 which constitutes the rest of the contents data.

The output data buffer 552 stores the byte data selected by the selector 551, and outputs the byte data when it has stored 512 pieces of byte data constituting one data management block.

The combination unit 55 stores, for example, null data so that the selector 551 can select the null data instead of the data judged as not effective by the effective range judgement unit 514.

Detailed Operation of Encryption Control Unit 50

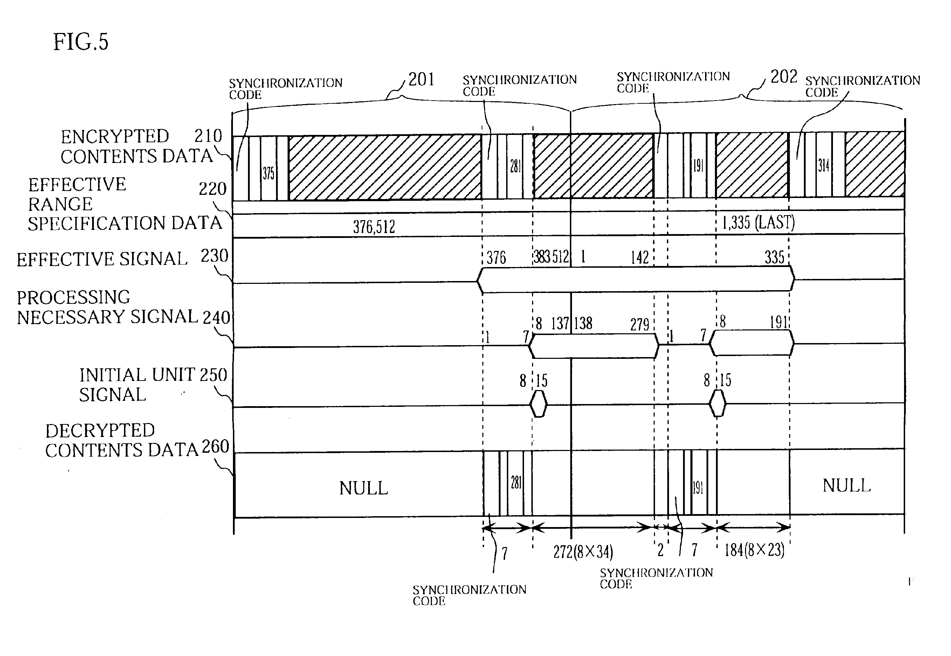

The operation of the encryption control unit 50 will be described in detail with reference to an example shown in FIG. 5. In FIG. 5, "210" represent the encrypted contents data which includes four frames. The header field of each frame includes a synchronization code and a numeral indicating the frame length ("375", "281", "191", and "314"). This example shows that the second and third frames among the four frames are decrypted. The "effective range specification data" 220 indicates an effective range as from the start of the second frame to the end of the third frame. More specifically, the "effective range specification data" 220 specifies "376" and "512" for the data management block 201, and "1" and "335" for the data management block 202. These specifications show that the $376^{th}$ byte to the 512 byte in the data management block 201 and the $1^{st}$ byte to the $335^{th}$ byte in the data management block 202 are effective ranges of the second and third frames.

FIG. 5 shows how signals 230 to 250 and the decrypted contents data 260 are output when the encrypted contents data 210 and the effective range specification data 220 are supplied. The effective signal 230 is output from the effective range judgement unit 514 and indicates that the byte data in the range indicated by the effective range specification data 220 is effective. The processing necessary signal 240 is output from the processing necessity judgement unit 524, and indicates the byte data that should be encrypted or decrypted. The initial unit signal 250 is output from the initial unit judgement unit 525, and indicates the byte data constituting the first encryption processing unit of a frame.

The areas with slanted lines in the encrypted contents data 210 indicate encrypted parts. The second and third frames, the target of decryption, range from the $376^{th}$ byte of the data management block 201 to the $144^{th}$ byte of the data management block 202 and from the $145^{th}$ byte to the $335^{th}$ byte of the data management block 202, respectively.

The effective range specification data 220 is generated to specify the above two frames as the effective range. As a result, the effective range specification data 220 is made to include numerals that specify the $376^{th}$ byte to the last ($512^{th}$) byte in the data management block 201 and the $1^{st}$ byte to the $335^{th}$ byte in the data management block 202. Now, the operation will be described for each data management block in order.

(1) The acquisition unit 51 acquires the first data management block of the contents data, namely data management block 201, also acquires "376" and "512" as the numerals indicating the start and end bytes of a range of the effective byte data in the data management block 201, and stores the data management block 201 and the numerals into the input data buffer 511 and the effective range register 515, respectively.

The block-length counter 513 shows the bytes #1 to #512 in order for the data management block 201. The input data buffer 511 sequentially outputs byte data corresponding to the byte serial numbers shown by the block-length counter 513.

The effective range judgement unit 514 outputs an effective signal specifying the byte data ranging from "376" to "512" shown by the block-length counter 513.

The selector 551 selects null values for the first to $375^{th}$ byte data of the data management block 201 which are excluded from the processing target specified by the effective signal output from the effective range judgement unit 514.

The output data buffer 552 stores the selected null values at the positions corresponding to the first to $375^{th}$ byte data.

The synchronization signal detection unit 521 detects the synchronization code at the start of the second frame, namely from the $376^{th}$ byte to the $377^{th}$ byte by monitoring the byte data specified as the processing target by the effective signal 230 when the frame length counter 523 has value 0. The frame length counter 523 starts counting by holding value "1" in correspondence to the $376^{th}$ byte data. The frame length extraction unit 522 extracts a numeral "281" indicating the frame length, while the frame length counter 523 holds values "4" to "6" in order, and stores the extracted numeral.

The processing necessity judgement unit 524, based on the condition described earlier, outputs the processing necessary signal 240 while the frame length counter 523 holds values "8" to "279" in order. The $8^{th}$ to $279^{th}$ byte data shown by the frame length counter 523 correspond to the $383^{rd}$ to $512^{th}$ byte data of the data management block 201 and the $1^{st}$ to $142^{nd}$ byte data of the data management block 202 shown by the block-length counter 513.

The selector 551 selects the byte data supplied from the input data buffer 511 for the $1^{st}$ to $7^{th}$ byte data shown by the frame length counter 523 which are specified as the processing target by the effective signal 230, but not by the processing necessary signal 240. The output data buffer 552 stores the seven bytes selected by the selector 551 into the 376th-byte to 382nd-byte storage areas in itself.

The processing data buffer 531 forms the first encryption processing unit of the second frame by storing the 8th to 15th byte data shown by the frame length counter 523, and supplies the encryption calculation unit 54 with the formed encryption processing unit. The initial unit judgement unit 525 outputs the initial unit signal 250 for the 8th to 15th byte data in accordance with the condition described earlier.

The key generation unit 542, after receiving the initial unit signal 250 from the initial unit judgement unit 525, generates the initial key for the first encryption processing unit, and supplies the function calculation unit 541 with the initial key.

The function calculation unit 541 decrypts the first encryption processing unit using the initial key, outputs the decryption result to the combination unit 55, and outputs the intermediate result of this decryption to the key generation unit 542.

The processing data buffer 531 then forms the second encryption processing unit of the second frame by storing the 16th to 23rd byte data shown by the frame length counter 523, and supplies the encryption calculation unit 54 with the formed second encryption processing unit. The initial unit judgement unit 525 does not output the initial unit signal 250 for the byte data in accordance with the condition described earlier.

Since the initial unit judgement unit 525 does not output the initial unit signal 250, the key generation unit 542 generates the chain key for the second encryption processing unit based on the intermediate result for the first encryption processing unit, and supplies the function calculation unit 541 with the chain key.

The function calculation unit 541 decrypts the second encryption processing unit using the chain key, outputs the decryption result to the combination unit 55, and outputs the intermediate result of this decryption to the key generation unit 542.

The processing data buffer 531 then sequentially forms each 8-byte encryption processing unit from the 24th to 279th byte data of the second frame which are specified as the processing target by both the effective signal 230 and processing necessary signal 240, and supplies the encryption calculation unit 54 with each of the formed encryption processing units. The encryption calculation unit 54 decrypts each of the encryption processing. units using the chain key, and outputs each decryption result to the combination unit 55.

(2) After outputting the last byte data of the data management block 201, the acquisition unit 51 acquires the following data management block 202, and stores it in the input data buffer 511. The acquisition unit 51 also acquires "1" and "335" as the numerals indicating the start and end bytes of a range of the effective byte data in the data management block 202. The acquisition unit 51 also acquires a flag indicating that the data management block 202 is the last data management block that includes the last portion of the data to be encrypted or decrypted. The acquisition unit 51 stores the numerals and flag into the effective range register 515.

The block-length counter 513 shows the bytes #1 to #512 in order for the data management block 202. The input data buffer 511 sequentially outputs byte data corresponding to the byte serial numbers shown by the block-length counter 513.

The effective range judgement unit 514 outputs the effective signal 230 specifying the byte data ranging from "1" to "335" shown by the block-length counter 513. The effective range judgement unit 514 does not output the effective signal 230 for the 336th byte and onwards since they are out of effective range.

The frame length counter 523 has "137" in correspondence to the 512th byte of the data management block 201, has "138" in correspondence to the first byte of the data management block 202, and carries on counting.

The processing necessity judgement unit 524 outputs the processing necessary signal 240 while the frame length counter 523 holds values "138" to "279" in order.

The processing data buffer 531 stores the first byte of the data management block 202 after the 512th byte of the data management block 201.

The selector 551 selects eight bytes of the decryption results supplied from the encryption calculation unit 54 at a time for the byte data specified as the processing target by both the effective signal 230 and processing necessary signal 240, and outputs the decryption results to the output data buffer 552 on a byte-by-byte basis.

The output data buffer 552 completes the first decrypted data management block by storing the 383rd byte to the 512th byte of the data management block 201 at the corresponding position, and outputs the completed data management block. The output data buffer 552 then stores the decryption results of the first byte to the 142nd byte of the data management block 202 at the corresponding position.

It should be noted here that the processing necessary signal 240 is not output for the 143rd and 144th bytes of the data management block 202 though these bytes belong to the data field of the second frame. This is because these bytes are odd pieces of data that cannot form one encryption processing unit. Such bytes are not encrypted, hence there is no need for decrypting the bytes. The selector 551 selects the byte data supplied from the input data buffer 511 in correspondence to the 143rd and 144th bytes.

The synchronization signal detection unit 521 monitors the 145th byte and onwards of the data management block 202 which are specified as the processing target by the effective signal 230 when the frame length counter 23 has value 0, and detects that the 145th and 146th bytes are the synchronization code at the start of the third frame.

The encryption control unit 50 processes the third frame in the same way as the second frame.

The selector 551 selects null values for the $336^{th}$ byte to the $512^{th}$ byte of the data management block 202 which are excluded from the processing target specified by the effective signal 230. The output data buffer 552 completes the second decrypted data management block by storing the selected null values at the positions corresponding to the $336^{th}$ byte to the $512^{th}$ byte, and outputs the completed data management block.

Up to this point, the decryption process performed by the encryption control unit 50 in Embodiment 1 has been described in detail.

Brief Account of Embodiment 1

With the construction described above, the processing necessity judgement unit 524 outputs the processing necessary signal indicating the encrypted portions of the encrypted contents data. The synchronization signal detection unit 521 detects the synchronization code located at the start -of each frame. The initial unit judgement unit 525 outputs the initial unit signal indicating the first encryption processing unit of each frame, with reference to the position where the detected synchronization code is located. The encryption calculation unit 54 decrypts the first encryption processing unit indicated by the initial unit signal using the initial key, and the other encryption processing units using the chain key.

With the above construction, the encryption control unit 50 can properly judge which of the initial key and the chain key should be used for each encryption processing unit, without decrypting all portions of the encrypted contents data. This achieves a high-speed decryption process.

The encryption process for encrypting the contents data to conform to the above decryption process can be achieved by the major components including the encryption control unit 50 with the same construction and operation as above. This is because, as described earlier, the encryption function used in the encryption is the same as the decryption function used in the decryption except for the key value, and that the construction and operation for decrypting certain portions of the contents data are the same as those for encrypting the certain portions in terms of the major components.

With the above construction, the encryption control unit 50 generates the encrypted contents data which has the same security as before since it encrypts the data field, and is decrypted at high speed since it does not encrypt the header field.

<Embodiment 2>

The following is a description of the encryption control apparatus in Embodiment 2 explained with reference to the drawings.

Contents Data Reception/Reproduction Apparatus 100

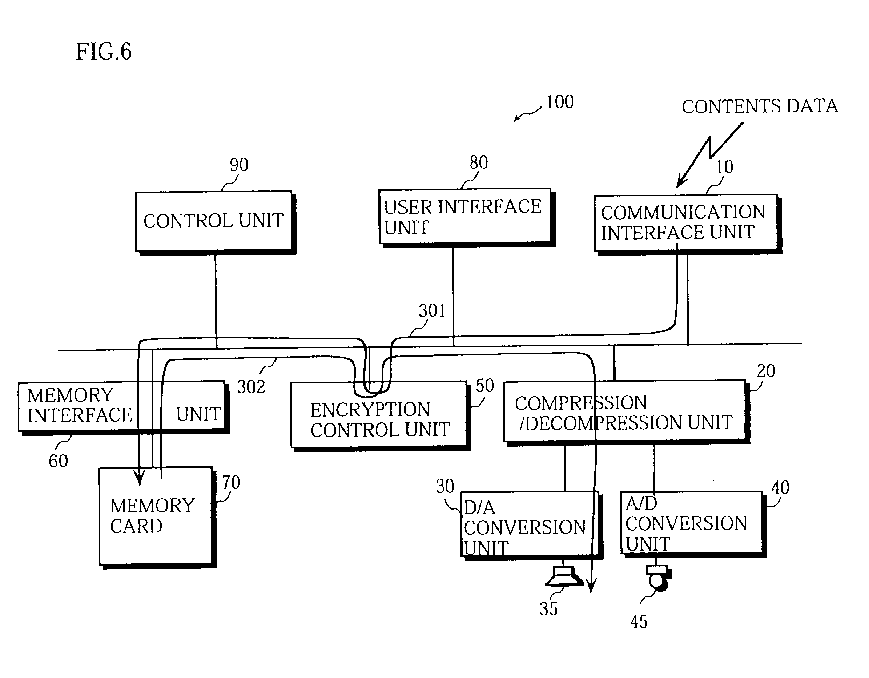

FIG. 6 shows the construction of the contents data reception/reproduction apparatus 100. The contents data reception/reproduction apparatus 100 of Embodiment 2 has the same construction as Embodiment 1, but differs from it in that the encryption control unit 50 encrypts or decrypts a plurality of streams of contents data simultaneously with time sharing.

For example, the encryption control apparatus 50 with time sharing acquires received contents data 301 from the communication interface unit 10 one data management block at a time, acquires reproduction contents data 302 from the memory interface unit 60 one data management block at a time, and encrypts and decrypts both streams of contents data simultaneously with time sharing. With such an operation, the contents data reception/reproduction apparatus 100 performs two operations simultaneously: the operation of encrypting and storing the contents data received via the network into the memory card; and the operation of decrypting encrypted contents data having already been stored in the memory card.

Now, only differences from Embodiment 1 will be described in detail.

Contents Data 300

The encryption control unit 50 acquires contents data which has been made from two streams of contents data by arranging every certain number of data management blocks from each stream alternately in line. The construction of the two streams of contents data is the same as the contents data 110 in Embodiment 1.

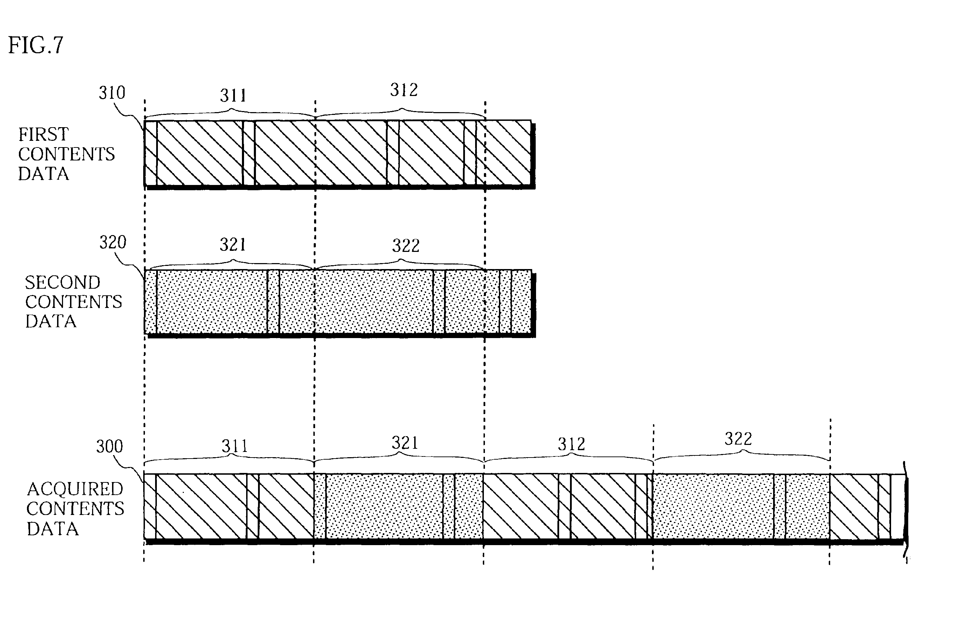

FIG. 7 shows a construction of the contents data 300. As shown in the drawing, the contents data 300 is formed by arranging the data management blocks 311, 312 of the first contents data 310 and the data management blocks 321, 322 of the second contents data 320, alternately one by one. The two streams of contents data may not necessarily be arranged alternately so that the stream changes every data management block, but the number of data management blocks per portion for each stream may be proportionate to the data rate of the stream, for example.

In FIG. 7, different patterns are applied to the data management blocks of the two streams, respectively, for the sake of convenience.

Encryption Control Unit 50

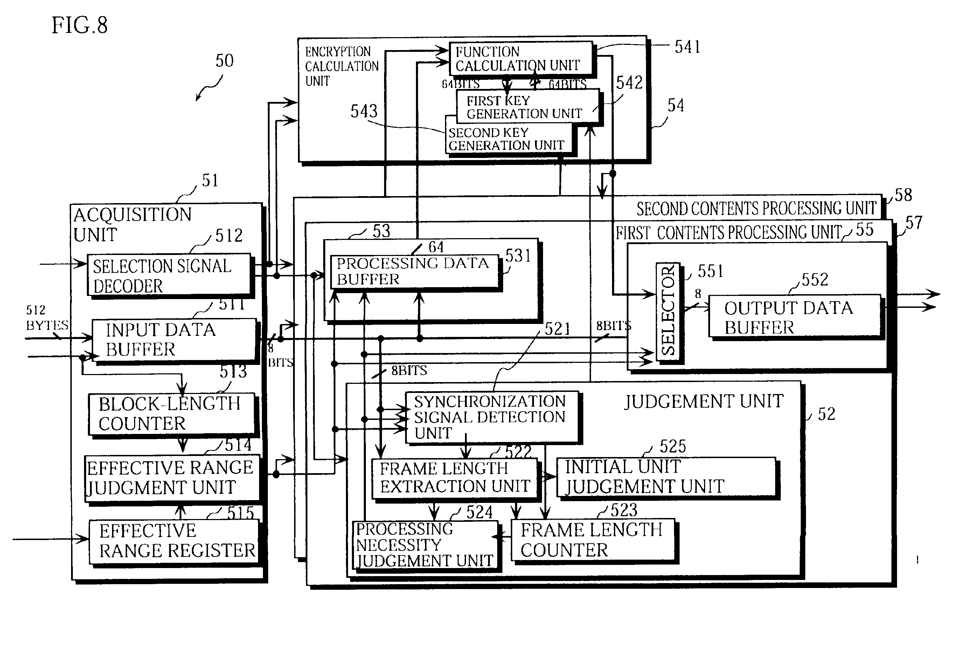

FIG. 8 shows the construction of the encryption control unit 50 in Embodiment 2. The encryption control unit 50 is composed of: the acquisition unit 51, encryption calculation unit 54, a first contents processing unit 57 including the judgement unit 52, separation unit 53, and combination unit 55; and a second contents processing unit 58. The encryption control unit 50 encrypts or decrypts two streams of contents data acquired with time sharing, and outputs each stream of encrypted or decrypted contents data.

Acquisition Unit 51

The acquisition unit 51 additionally includes a selection signal decoder 512, as well as the components shown in Embodiment 1.

The acquisition unit 51 acquires with time sharing contents data from the communication interface unit 10 one data management block at a time, acquires contents data from the memory interface unit 60 one data management block at a time, and stores the acquired data into the input data buffer 511.

The acquisition unit 51, at the same time as it acquires a data management block, acquires from the control unit 90 information identifying a stream of contents data to which the data management block belongs.

The selection signal decoder 512 outputs a first selection signal to the first contents processing unit 57 and the encryption calculation unit 54 while the input data buffer 511 supplies each byte data of the data management blocks acquired from the communication interface unit 10, and outputs a second selection signal to the second contents processing unit 58 and the encryption calculation unit 54 while the input data buffer 511 supplies each byte data of the data management blocks acquired from the memory interface unit 60.

First Contents Processing Unit 57

The first contents processing unit 57 includes a judgement unit 52, a separation unit 53, and a combination unit 55. These three units in the first contents processing unit 57 have the same constructions and functions as corresponding units in Embodiment 1, but process only the contents data acquired from the communication interface unit 10 by processing the byte data input with the first selection signal and not processing the byte data without the first selection signal.

Second Contents Processing Unit 58

The second contents processing unit 58 has the same construction as the first contents processing unit 57, and processes only the byte data acquired from the memory interface unit 60.

Encryption Calculation Unit 54

The encryption calculation unit 54 includes a function calculation unit 541, a first key generation unit 542, and a second key generation unit 543.

The function calculation unit 541 performs an encryption calculation on each encryption processing unit input with the first selection signal, using a key supplied from the first key generation unit 542, performs a decryption calculation on each encryption processing unit input with the second selection signal, using a key supplied from the second key generation unit 543, and outputs the encrypted or decrypted contents data to the combination unit 55 in the corresponding contents processing unit.

The first key generation unit 542 is constructed the same as the key generation unit in Embodiment 1, but generates a key used for encrypting the encryption processing unit given with the first selection signal.

The second key generation unit 543 is constructed the same as the key generation unit in Embodiment 1, but generates a key used for decrypting the encryption processing unit given with the second selection signal.

Detailed Operation of Encryption Control Unit 50

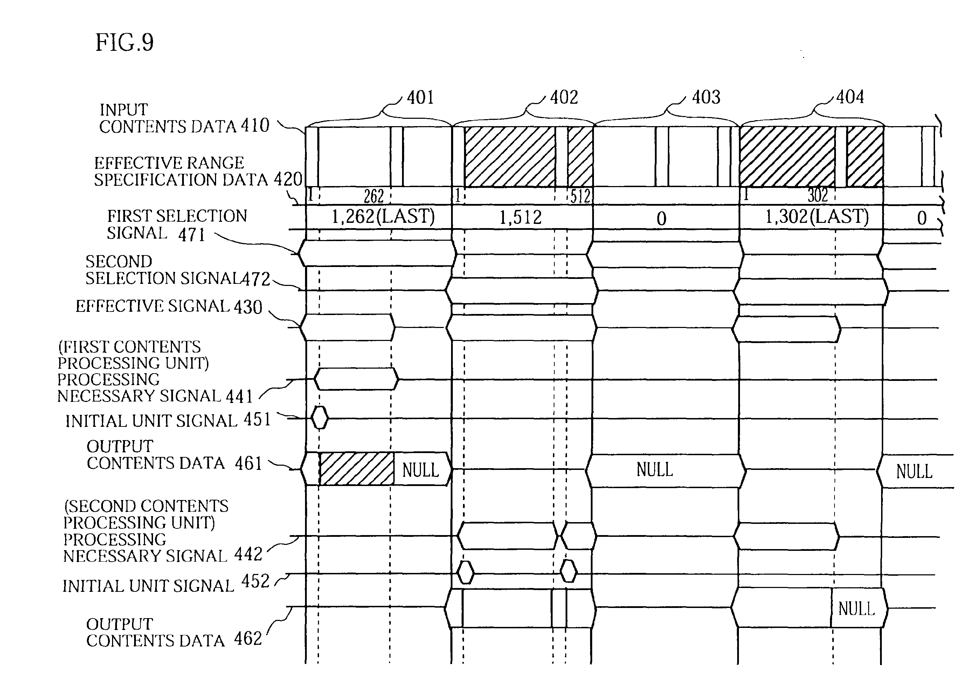

The operation of the encryption control unit 50 will be described in detail with reference to an example shown in FIG. 9.

FIG. 9 shows how various signals and output contents data are output when the encrypted contents data 410 and the effective range specification data 420 are supplied. The first selection signal 471 and the second selection signal 472 are output from the selection signal decoder 512 in correspondence to each stream of contents data in the input contents data 410. The effective signal 430 is output from the effective range judgement unit 514. The processing necessary signal 441 is output from the processing necessity judgement unit 524 in the first contents processing unit. Also, the initial unit signal 451 is output from the first contents processing unit. The processing necessary signal 442, initial unit signal 452, and output contents data 462 are output in relation to the second contents processing unit.

In FIG. 9, the areas with slanted lines in the input contents data 410 and the output contents data 461 indicate encrypted parts.

In the present example, the encryption control unit 50 acquires, as input contents data 410, data management blocks 401, 402, 403, and 404 one by one alternately, the data management blocks 401 and 403 being sent from the communication interface unit 10, and the data management blocks 402 and 404 from the memory interface unit 60. The effective range specification data 420 specifies the effective range which includes: the first frame sent from the communication interface unit 10; and the first and second frames sent from the memory interface unit 60. The operation will be described in detail for each data management block.

(1) While the input data buffer 511 supplies each piece of byte data of the data management block 401, the selection signal decoder 512 outputs the first selection signal 471. The first contents processing unit 57 processes each piece of byte data of the data management block 401 given with the first selection signal 471. The second contents processing unit 58 does not process these pieces of byte data since the second selection signal 472 is not given with the byte data.

The encryption calculation unit 54 receives the first selection signal from the selection signal decoder 512, and at the same time receives, from the separation unit 53, the encryption processing unit composed of the byte data in the data management block 401 specified by the processing necessary signal. The first key generation unit 542 generates a key used for encrypting this encryption processing unit. The function calculation unit 541 encrypts this encryption processing unit using this key, and outputs the encryption result.

The encryption result is processed by the combination unit 55 of the first contents processing unit 57. The second contents processing unit 58 does not process this encryption result.

Note that the operation of the judgement unit 52, separation unit 53, and combination unit 55 onto each piece of byte data of the data management block 401 is not described here since it is the same as Embodiment 1.

(2) While the input data buffer 511 supplies each piece of byte data of the data management block 402, the selection signal decoder 512 outputs the second selection signal 472. The second contents processing unit 58 processes each piece of byte data of the data management block 402 given with the second selection signal 472.

The first contents processing unit 57 does not process this piece of byte data since the first selection signal 471 is deleted. The first contents processing unit 57 is in a state of having processed the last piece of byte data of the data management block 401 until the first contents processing unit 57 receives the first selection signal 471 again.

The encryption calculation unit 54 receives the second selection signal from the selection signal decoder 512, and at the same time receives, from the separation unit 53, the encryption processing unit composed of the byte data in the data management block 402 specified by the processing necessary signal. The second key generation unit 543 generates a key used for encrypting this encryption processing unit. The function calculation unit 541 decrypts this encryption processing unit using this key, and outputs the encryption result.

The decryption result is processed by the combination unit of the second contents processing unit 58. The first contents processing unit 57 does not process this encryption result.

(3) While the input data buffer 511 supplies each piece of byte data of the data management block 403, the selection signal decoder 512 outputs the first selection signal 471 again. The first contents processing unit 57, given with the first selection signal 471, processes each piece of byte data of the data management block 403 following the last piece of byte data of the data management block 401.

The second contents processing unit 58 does not process this piece of byte data since the second selection signal 472 is deleted. The second contents processing unit 58 is in a state of having processed the last piece of byte data of the data management block 402 until the second contents processing unit 58 receives the second selection signal 472 again.

(4) While the input data buffer 511 supplies each piece of byte data of the data management block 404, the selection signal decoder 512 outputs the second selection signal 472 again. The second contents processing unit 58, given with the second selection signal 472, processes each piece of byte data of the data management block 404 following the last piece of byte data of the data management block 402.

Up to this point, the operation of the encryption control unit 50 for encrypting or decrypting two pieces of contents data simultaneously with time sharing has been described.

Brief Account of Embodiment 2

With the above construction, if a stream of contents data is not distributed at the real-time rate due to the slow communication speed in the network, users can receive this stream of contents data, and at the same time reproduce another stream of encrypted contents data having already been obtained. This improves the utility of the present apparatus.

<Variations>

(1) In the above Embodiments, the size of the encryption processing unit is set to 64 bits. It is needless to say, however, that different sizes can be applied to the encryption processing unit.

(2) In the above Embodiments, the initial key is used for encrypting or decrypting the first encryption processing unit, and the chain key for the other encryption processing units of each frame. However, the chain key may be used for the succeeding, continuous frames.

(3) In the above Embodiments, the end part of each data field which is smaller than the encryption processing unit is excluded from the encryption or decryption target. However, the end part may be encrypted or decrypted after the end part is enlarged to the size of the encryption processing unit by adding null data to the part.

With this construction, the security of the encrypted contents data increases since the data field is completely encrypted.

(4) In the above Embodiments, each header field is not encrypted or decrypted. However, when the header field includes management information such as the number times the contents data has actually been copied, the management information may be encrypted or decrypted.

With the above construction, unauthorized copying of the encrypted contents data is prevented more reliably.

The present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

**Claims**

1. A contents data conversion apparatus for either encrypting or decrypting streams of contents data which are each divided into a plurality of frames, each frame including a piece of header information and a contents portion, the piece of header information including attribute information of the frame, all contents portions in each stream of contents data forming a content, the contents data conversion apparatus comprising:

an acquisition unit operable to acquire one or more streams of contents data;
an extraction unit operable to extract frames one by one from the one or more streams of contents data;
a separation unit operable to separate each of the extracted frames into the piece of header information and the contents portion;
a conversion unit operable to either encrypt or decrypt each contents portion to generate a converted contents portion; and
a combination unit operable to combine each piece of header information with each converted contents portion, and output a result of the combination.

2. The contents data conversion apparatus of Claim 1, wherein

the piece of header information of each frame includes, at a certain position in the piece of header information, a synchronization code that is a predetermined pattern of bits, and
the extraction unit detects the synchronization code from each piece of header information and extracts each frame from the one or more streams of contents data based on the detected synchronization codes.

3. The contents data conversion apparatus of Claim 2, wherein

the piece of header information of each frame includes, subsequent to the synchronization code, frame length information indicating a length of the frame, and
the extraction unit detects the frame length information and extracts each frame by extracting the synchronization code and succeeding data of the length indicated by the detected frame length information from the one or more streams of contents data.

4. The contents data conversion apparatus of Claim 3, wherein

the piece of header information of each frame is located at a start of the frame and has a fixed length, and
the separation unit separates the piece of header information by separating a starting portion having the fixed length from each separated frame, and separates a remaining portion of the frame as the contents portion.

5. The contents data conversion apparatus of Claim 4, wherein

the acquisition unit acquires one or more pieces of range information corresponding to the one or more streams of contents data on a one-to-one basis, each piece of range information indicating a block in the one or more streams of contents data, and
the extraction unit extracts each frame from each block by detecting the synchronization code included in each block indicated by each piece of range information.

6. The contents data conversion apparatus of Claim 5, wherein
the conversion unit divides each separated contents portion into processing units each having a predetermined length, in order from a start, either encrypts or decrypts each processing unit, and combines all encrypted or decrypted processing units of each separated contents portion with an end part of the separated contents portion to generate each converted contents portion, the end part being smaller than one processing unit.

7. The contents data conversion apparatus of Claim 6, wherein
the combination unit further outputs the one or more streams of contents data acquired by the acquisition unit excluding the frames extracted by the extraction unit.

8. The contents data conversion apparatus of Claim 6, wherein

the combination unit further outputs null data as a replacement for parts of the one or more streams of contents data acquired by the acquisition unit other than the frames extracted by the extraction unit.

9. The contents data conversion apparatus of Claim 1, wherein

the extraction unit includes one or more subextraction units which operate in parallel, the one or more sub-extraction units corresponding to the one or more streams of contents data on a one-to-one basis, and each sub-extraction unit extracting frames one by one from a corresponding stream of contents data,
the separation unit includes one or more subseparation units which correspond to the one or more sub-extraction units on a one-to-one basis and operate in parallel, each sub-separation unit separating each frame extracted by a corresponding sub-extraction unit into the piece of header information and the contents portion and storing the contents portion,
the conversion unit converts each contents portion separated by each sub-separation unit into each converted contents portion, and
the combination unit includes one or more subcombination units which correspond to the one or more sub-separation units on a one-to-one basis and operate in parallel, each sub-combination unit combining each piece of header information separated by a corresponding subseparation unit with each converted contents portion converted from each contents portion separated by the corresponding sub-separation unit, and outputting a result of the combination.

10. The contents data conversion apparatus of Claim 9, wherein

the acquisition unit acquires.multiplexed contents data in which a plurality of streams of contents data have been multiplexed, separates the multiplexed contents data into the plurality of streams of contents data, and
the one or more sub-extraction units correspond to the plurality of streams of contents data on a one-to-one basis, and each sub-extraction unit extracts frames one by one from a corresponding stream of contents data separated by the acquisition unit.

11. The contents data conversion apparatus of Claim 10, wherein

the piece of header information of each frame includes, at a certain position in the piece of header information, a synchronization code that is a predetermined pattern of bits, and
each sub-extraction unit detects the synchronization code from each piece of header information in the corresponding stream of contents data separated by the acquisition unit, and extracts each frame from the corresponding stream of contents data based on the detected synchronization codes.

12. The contents data conversion apparatus of Claim 11, wherein

the piece of header information of each frame includes, subsequent to the synchronization code, frame length information indicating a length of the frame, and
each sub-extraction unit detects the frame length information and extracts each frame by extracting the synchronization code and succeeding data of the length indicated by the detected frame length information from the corresponding stream of contents data.

13. The contents data conversion apparatus of Claim 12, wherein

the piece of header information of each frame is located at a start of each frame and has a fixed length, and
each sub-separation unit separates the piece of header information by separating a starting portion having the fixed length from each frame separated by the corresponding sub-extraction unit, and separates a remaining portion of the frame as the contents portion.

14. The contents data conversion apparatus of Claim 13, wherein

the acquisition unit acquires one or more pieces of range information corresponding to the one or more streams of contents data on a one-to-one basis, each piece of range information indicating a block in the one or more streams of contents data, and
each sub-extraction unit extracts each frame from each block by detecting the synchronization code included in each block indicated by each piece of range information.

15. The contents data conversion apparatus of Claim 14, wherein

the conversion unit divides each separated contents portion into processing units each having a predetermined length, in order from a start, either encrypts or decrypts each processing unit, and combines all encrypted or decrypted processing units of each separated contents portion with an end part of the separated contents portion to generate each converted contents portion, the end part being smaller than one processing unit.

**16.** The contents data conversion apparatus of Claim 15, wherein
each sub-combination unit further outputs the corresponding stream of contents data separated by the acquisition unit excluding the frames extracted by the corresponding sub-extraction unit.

**17.** The contents data conversion apparatus of Claim 15, wherein
each sub-combination unit further outputs null data as a replacement for parts of the corresponding stream of contents data separated by the acquisition unit other than the frames extracted by the corresponding sub-extraction unit.

**18.** A contents data conversion method for use in a contents data conversion apparatus for either encrypting or decrypting streams of contents data, the contents data conversion method comprising:

an acquisition step for acquiring one or more streams of contents data;
an extraction step for extracting frames one by one from the one or more streams of contents data;
a separation step for separating each of the extracted frames into the piece of header information and the contents portion;
a conversion step for either encrypting or decrypting each contents portion to generate a converted contents portion; and
a combination step for combining each piece of header information with each converted contents portion, and outputting a result of the combination.

**19.** A computer-readable record medium recording a program for use in a contents data conversion apparatus for either encrypting or decrypting streams of contents data, the program comprising:

an acquisition step for acquiring one or more streams of contents data;
an extraction step for extracting frames one by one from the one or more streams of contents data;
a separation step for separating each of the extracted frames into the piece of header information and the contents portion;
a conversion step for either encrypting or decrypting each contents portion to generate a converted contents portion; and
a combination step for combining each piece of header information with each converted contents portion, and outputting a result of the combination.

FIG.1

FIG.2

FIG.3

100

90 CONTROL UNIT

80 USER INTERFACE UNIT

10 COMMUNICATION INTERFACE UNIT

60 MEMORY INTERFACE UNIT

50 ENCRYPTION CONTROL UNIT

20 COMPRESSION /DECOMPRESSION UNIT

70 MEMORY CARD

30 D/A CONVERSION UNIT

40 A/D CONVERSION UNIT

35

45

EP 1 096 714 A2

FIG.4

# FIG.5

EP 1 096 714 A2

FIG.6

EP 1 096 714 A2

FIG.7

FIG.8

# FIG.9

INPUT CONTENTS DATA 410

401 402 403 404

EFFECTIVE RANGE SPECIFICATION DATA 420

| | 262 | | | 512 | | 1 | 302 | |

FIRST SELECTION SIGNAL 471

| 1,262(LAST) | 1,512 | 0 | 1,302(LAST) | 0 |

SECOND SELECTION SIGNAL 472

EFFECTIVE SIGNAL 430

(FIRST CONTENTS PROCESSING UNIT) PROCESSING NECESSARY SIGNAL 441

INITIAL UNIT SIGNAL 451

OUTPUT CONTENTS DATA 461

| NULL | NULL | NULL |

(SECOND CONTENTS PROCESSING UNIT) PROCESSING NECESSARY SIGNAL 442

INITIAL UNIT SIGNAL 452

OUTPUT CONTENTS DATA 462

| NULL |

EP 1 096 714 A2

FIG.10

EP 1 096 714 A2